(19) Europäisches Patentamt / European Patent Office / Office européen des brevets

(11) **EP 4 446 137 A1**

(12) **EUROPEAN PATENT APPLICATION**

(43) Date of publication:
**16.10.2024 Bulletin 2024/42**

(21) Application number: **23167560.4**

(22) Date of filing: **12.04.2023**

(51) International Patent Classification (IPC):
***B60C 23/04*** *(2006.01)*

(52) Cooperative Patent Classification (CPC):
**B60C 23/0416; B60C 23/0437; B60C 23/0489**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Bridgestone Europe NV/SA
1930 Zaventem (BE)**

(72) Inventor: **Testi, Giulio
00128 Roma (IT)**

(74) Representative: **Marchetti, Alessio
Bridgestone Europe N.V./S.A. - Italian Branch
Technical Center
Via del Fosso del Salceto, 13/15
00128 Roma (IT)**

(54) **AUTOMATIC IDENTIFICATION OF A TIRE MOUNTING POSITION ON A VEHICLE**

(57)     A computer-implemented method for automatic detection of the mounting position of a tire on a vehicle equipped with two or more tires, the method comprising:
- transmitting, by a tire mounted sensor mounted on the tire, one or more signals at each of a plurality of predetermined angular positions during at least one rotation of the tire;
- receiving, by a receiving unit, the transmitted one or more signals;
- processing, by a processing unit, the received one or more signals by:
- measuring the relative signal strength indicator (RSSI) value of each of the one or more signals being transmitted at each of a plurality of predetermined angular positions;
- associating, based on the measured RSSI values, a derived angular RSSI value to each of the plurality of predetermined angular positions;
- grouping the derived angular RSSI values into a group of angular RSSI values forming an RSSI code associated to the tire;
- evaluating the difference of the group of angular RSSI values associated to the tire with respect to each code in a predetermined set of reference RSSI codes, wherein each code of said predetermined set of reference RSSI codes is associated to a known tire mounting position on the vehicle; and

- determining the mounting position of the tire on the vehicle based on the evaluated difference of the group of angular RSSI values associated to the tire with respect to each of the predetermined reference RSSI codes.

FIG.5

## Description

## Field of the invention

The present invention relates to methods, systems and computer program for automatically identifying the mounting position of a tire equipped with a tire-mounted sensor (TMS) on a vehicle.

## Background

A sensor attached to a tire is generally referred to as Tire-Mounted Sensor (TMS). TMSs are used to monitor some parameters of the corresponding tire (such as pressure, temperature, load, speed, etc.) and/or extract some information on the interaction of the tire with the surrounding environment (such as the road surface and/or the vehicle). A TMS also carries a unique identification number (UID) that uniquely identifies a corresponding sensor and the tire to which it is attached.

This association allows to build a history of measurements related to a tire, which allows not only to detect the current status of the tire but, with appropriate analyses, also to make predictions on the future conditions of the tire - e.g. in terms of wear rate, pressure loss rate, etc. Therefore, it is possible, at any time, to identify a specific TMS unit. On the TMS unit itself it is also possible to store, in association to data indicative of its installation on a tire fitted on a vehicle, data indicative of the mounting position of the tire on the vehicle. This information on the mounting position is fundamental to properly exploit, cross-check and integrate all the tire and vehicle data provided by TMS units. A trivial example is given by the correct pressurisation of a tire, which is based on the position where the tire is mounted (e.g. front or rear). Another example is that of a scenario where load is unevenly distributed over the vehicle suspensions and therefore tires are not equally affected by the applied load: also in this case, knowing precisely the current mounting position of a tire on a vehicle allows to correct real-time the parameters of those tires which are more affected and, at the same time, to render more accurate the predictions on the wear rate of the tires.

However, during the life of a vehicle, the tires fitted therewith can be swapped or completely replaced, thereby determining a change in the mounting position of the tires on the vehicle. A TMS unit can also be uncoupled from a tire and replaced with another, e.g. due to a physical rupture or battery depletion. It is then particularly cumbersome and time-consuming to manually verify the mounting position of a tire on a vehicle at an arbitrary time instant. Although methods are known in the prior art that allow to perform such a verification in an automatic manner thanks to TMS units mounted on the vehicle tires, they suffer from several drawbacks. For instance: (a) the on-board antenna(s) receiving the TMS information signals need to be positioned according to a fixed configuration, because they are sensitive to noise to the extent that signals can be missed and/or not decoded correctly; (b) the TMS signals must be collected while the vehicle is stopped or is proceeding at a very limited speed, since an increasing speed also increases the noise on the collected signals and the possibility of errors; (c) a sophisticated synchronisation and bidirectional communication is required between the antenna(s) and the TMS units, thereby heavily affecting the use of resources (especially the battery consumption) of the TMS units.

## Summary of the invention

The present invention aims to solve the drawbacks above.

According to a first aspect of the invention, there is provided a computer-implemented method for automatic detection of the mounting position of a tire on a vehicle equipped with two or more tires, the method comprising:

-  transmitting, by a tire mounted sensor mounted on the tire, one or more signals at each of a plurality of predetermined angular positions during at least one rotation of the tire;
-  receiving, by a receiving unit, the transmitted one or more signals;
-  processing, by a processing unit, the received one or more signals by:

    -  measuring the relative signal strength indicator (RSSI) value of each of the one or more signals transmitted at each of the plurality of predetermined angular positions;
    -  associating, based on the measured RSSI values, a derived angular RSSI value to each of the plurality of predetermined angular positions;
    -  grouping the derived angular RSSI values into a group of angular RSSI values forming an RSSI code associated to the tire;
    -  evaluating the difference of the group of angular RSSI values associated to the tire with respect to each code in a predetermined set of reference RSSI codes, wherein each code of said predetermined set of reference RSSI codes is associated to a known tire mounting position on the vehicle; and

-  determining the mounting position of the tire on the vehicle based on the evaluated difference of the group of angular RSSI values associated to the tire with respect to each of the predetermined reference RSSI codes.

For the purpose of the present disclosure, the terms "wheel" and "tire" are and will be used interchangeably.

Similarly, for the purpose of the present disclosure, the terms "code", "pattern" and "vector" are and will be used interchangeably.

According to a second aspect of the invention, it is provided a system for automatic detection of the mounting position of a tire on a vehicle equipped with two or more tires, the system comprising:

- a memory configured to store a predetermined set of reference RSSI codes, wherein each code of said predetermined set of reference RSSI codes is associated to a known tire mounting position on the vehicle;
- a tire mounted sensor mounted on the tire and configured to transmit one or more signals at each of a plurality of predetermined angular positions during at least one rotation of the tire;
- a receiving unit configured to receive the one or more transmitted signals;
- a processing unit configured to process the received one or more signals by:

  - measuring the relative signal strength indicator (RSSI) value of each of the one or more signals being transmitted at each of the plurality of predetermined angular positions;
  - associating, based on the measured RSSI values, a derived angular RSSI value to each of the plurality of predetermined angular positions;
  - grouping the derived angular RSSI values into a group of angular RSSI values forming an RSSI code associated to the tire;
  - evaluating the difference of the group of angular RSSI values associated to the tire with respect to each code in the predetermined set of reference RSSI codes; and
  - a determination unit configured to determine the mounting position of the tire on the vehicle based on the evaluated difference of the group of angular RSSI values associated to the tire with respect to each of the predetermined reference RSSI codes.

For the purpose of the present disclosure, the terms "signal" and "message" are and will be used interchangeably.

According to a third aspect of the invention, it is provided a computer program comprising instructions which, when the program is executed by a computer, cause the computer to carry out the method according to the first aspect.

In embodiments, associating, based on the measured RSSI values, a derived angular RSSI value to each of the plurality of predetermined angular positions comprises:

  selecting the measured RSSI value of any of the one or more signals transmitted at the predetermined angular position as the derived angular RSSI value associated to the predetermined angular position; or averaging the measured RSSI values of the one or more signals transmitted at the predetermined angular position and selecting the resulting average value as the derived angular RSSI value associated to the predetermined angular position.

In embodiments, the one or more transmitted signals encode a unique identifier of the corresponding tire mounted sensor transmitting the signal.

In embodiments, the one or more transmitted signals encode a unique identification number corresponding to a RFID tag embedded in the corresponding tire and allowing univocal identification of said tire.

In embodiments, the one or more transmitted signals encode the angular position from the plurality of predetermined angular positions at which the signal is transmitted.

In embodiments, the method according to the first aspect of the invention further comprises a preliminary learning phase performed for each tire mounted on the vehicle in a known mounting position, comprising the following steps:

- forming an RSSI code associated to the tire based on the group of angular RSSI values according to any of the preceding claims;
- saving the obtained RSSI code as the reference RSSI code in association to the corresponding known mounting position of the tire on the vehicle.

In embodiments, the plurality of predetermined angular positions is selected from the upper half of the tire arc.

In embodiments, the one or more transmitted signals are radio packets and the receiving unit comprises a radio receiver.

**Brief description of the drawings**

Reference will be made to the figures of the annexed drawings, wherein:

- Figure 1 shows a schematic diagram of a system for automatically identifying the mounting position of a tire on a vehicle according to an aspect of the present invention;
- Figure 2 shows an exemplary communication scheme among the entities of the system according to Figure 1;
- Figure 3 shows an example of RSSI vectors associated to the tires of a vehicle according to the present invention;
- Figure 4 shows details of an exemplary RSSI vector according to the present invention;
- Figure 5 shows a schematic flow diagram of a method for automatically identifying the mounting position of a tire on a vehicle according to an aspect of the present invention;

- Figure 6 shows a schematic flow diagram of a method for automatically identifying the mounting position of a tire on a vehicle according to another aspect of the present invention;
- Figure 7 shows an example of metric used to evaluate the distance among RSSI vectors according to the present invention;
- Figures 8-10 show the results of the implementation of the system according to an aspect of the present invention to an exemplary truck with a 8-wheels trailer.

## Detailed description of preferred embodiments of the invention

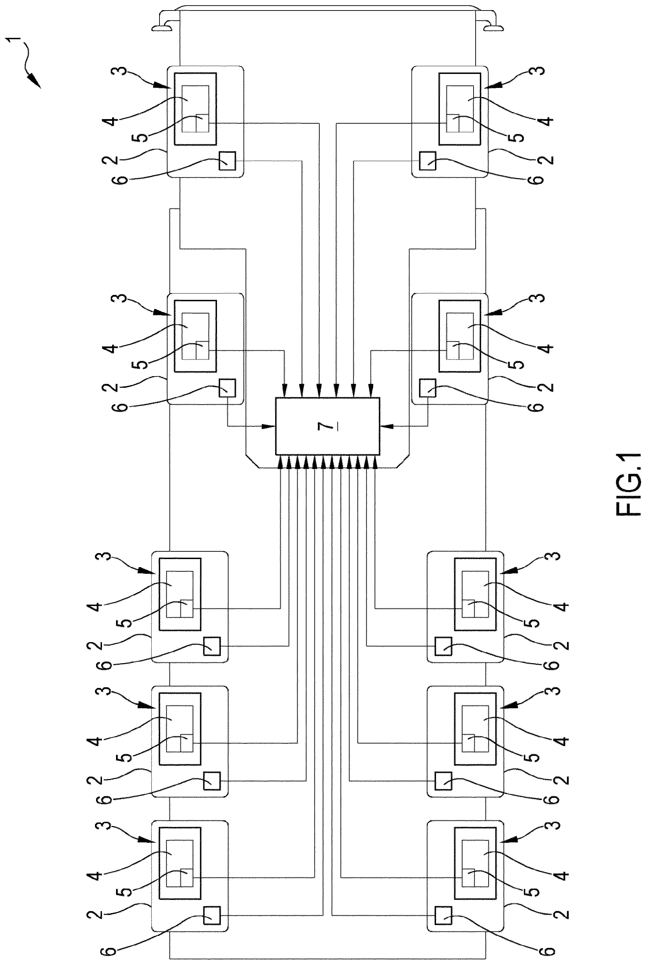

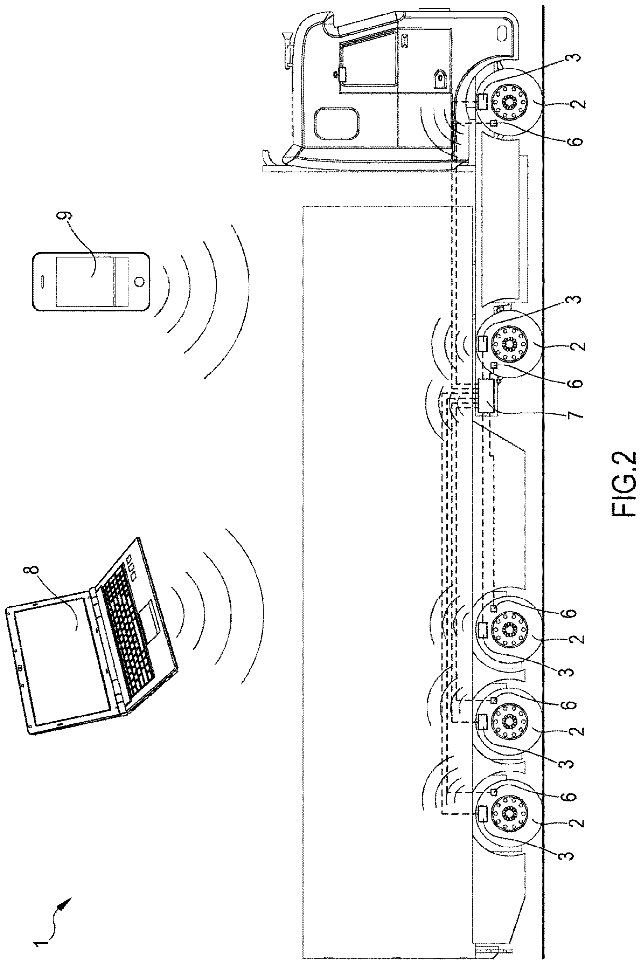

Figures 1 and 2 show a system for automatically identifying the mounting position of a tire on a vehicle according to an embodiment of the present invention. The system comprises a plurality of tire-mounted sensor (TMS) units, each attached to a tire and therefore associated to a respective wheel.

The vehicle 1 shown in Fig. 1 is, by way of example only, a truck. The vehicle 1 is fitted with a plurality of tires 2, to each of which a TMS unit 3 is attached. The TMS units 3 each include a microcontroller 4 comprising a memory and a processor 5. Each TMS unit 3 is associated to a unique ID identification number that allows to identify it univocally with respect to the other TMS units.

Each TMS unit 3 also comprises a transmission module that is configured to communicate with a receiving unit 7 installed on the vehicle 1. In an exemplary embodiment, the receiving unit is a radio receiver (e.g. an antenna) configured to measure the received signal strength indication (RSSI) of each signal (e.g. radio packet) received from the TMS units, and the transmission module of the TMS unit 3 is configured to transmit radio packets to the radio receiver.

In another exemplary embodiment, the transmission modulation may specifically be a 433 MHz FSK.

The person skilled in the art will readily recognise that the invention is not limited to any specific communication technology between any TMS unit and the receiving unit: any known communication method(s) and protocol(s) establishing a unidirectional or bidirectional communication channel is suitable for implementing the signal transmission and reception between the TMS units and the on-vehicle receiving unit according to the present invention.

In embodiments, the TMS units 3 may be configured to communicate with a remote device, such as a computer 8, a smartphone 9 or a remote server (not shown) via a network communication device mounted on the vehicle (not shown). The network communication device may be a dongle which is plugged into a port of the vehicle (e.g. an OBD port, FMS port, etc.), or the network communication device may be a permanently installed transceiver box. The remote server may comprise an online database/cloud/platform. In an exemplary embodiment, the TMS units may communicate with the network communication device via a Bluetooth® connection, but it will be understood that any suitable form of short-range wireless communication, or a wired connection, may be used. The network communication device may be networked and communicate via a wireless network connection (e.g. cellular network) to the remote device. The remote device may be further connected, via the wireless network or another wired connection, to an output device.

Each tire to which a corresponding TMS unit is attached may be equipped with a further wireless transmitting device, such as a RFID sensor 6, configured to univocally identify said tire. In this configuration, there are then two identification codes associated to the tire: a unique identification number associated to the TMS unit 3 (UID) and a unique identification number associated to the wireless transmitting device like the RFID sensor 6 (SGTIN-96). The TMS unit 3 may be configured to be further coupled to said specific wireless device: for instance, if a RFID sensor 6 is mounted on or in the tire, the TMS unit 3 may flash the RFID sensor 6 once so to store the unique identification number carried by the RFID sensor in its own memory.

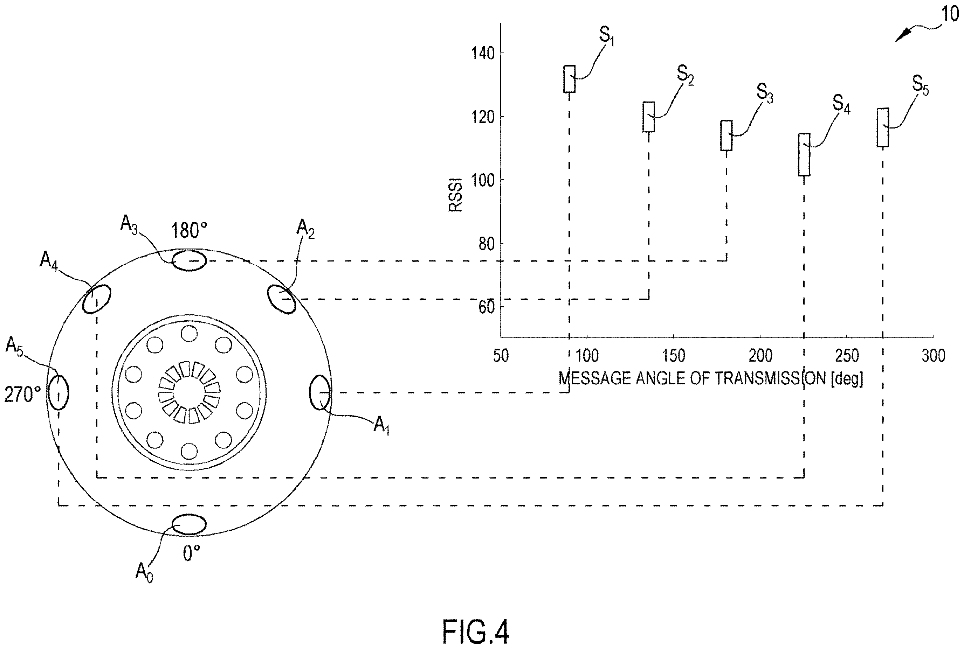

The transmission module of each TMS unit 3 is configured to transmit a signal, while the corresponding wheel rotates on a road surface (that can be a real road or a test machine rolling surface), at a predefined angular position with respect to the impact position of the TMS unit 3 on the ground. This is also shown in Fig. 4, which will be explained in more detail below.

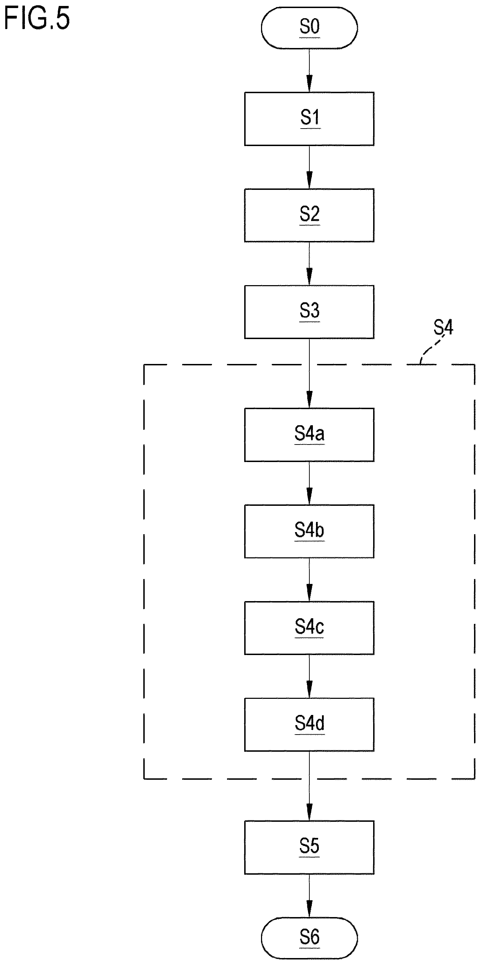

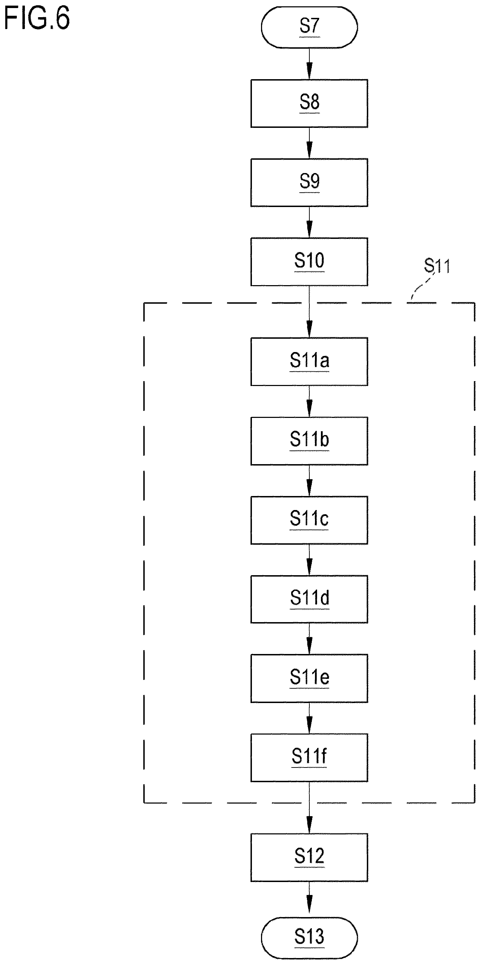

The system of Fig. 1 also comprises a processing unit and a determination unit (not shown). The function of these units will become apparent in view of the description of the auto-location method below, with further reference to Figures 5 and 6.

During rotation of the tire, the TMS unit 3, which is attached thereto by means of a sensor unit holding member, also rotates and positions itself at different angles $A_1$-$A_5$ with respect to the ground: in fact, the position in which the TMS unit 3 impacts with the ground is considered to be position $A_0$ at 0 degrees.

The spinning movement of the TMS unit 3 produces a centrifugal acceleration in the Z-axis direction that can be measured by means of an accelerometer and converted into digital samples by means of an Analog to Digital Converter system. The digital samples can be used to estimate several sensor/tire system parameters, including the angular speed during wheel revolution and the event of impact with the ground. The TMS unit 3 is able to recognize itself the ground impact and the revolution time $T_{rev}$ using well-known algorithms, such as that described in the patent application nr. EP21193660. At each revolution of the tire, the sensor is thus able to evaluate its angular speed $\Omega$ and estimate its angular position $\alpha$ in order to transmit a signal at a known angle:

$$\alpha(t) = \Omega(t) * t = \frac{2\pi}{T_{rev}(t)} * t$$

The present invention is based on the finding that the RSSI of a message $S_i$ transmitted by a TMS unit 3 positioned at a fixed wheel angular position $A_i$ remains basically stable over time (only small variations are observed). Therefore, the transmission - and subsequent reception - of several messages $S_i$ by the same TMS unit 3 (for instance, 5 messages $S_1$-$S_5$ transmitted over a wheel rotation), each at a different angular position $A_i$, will result in a RSSI pattern (or vector) 10 associated to the corresponding tire 2 that can be used to distinguish the tire and its mounting position on the vehicle 1 from the other tires on the vehicle.

The time in which the transmission has to start in order to transmit a message at a fixed predefined angular position can be calculated according to any known algorithm in the art. In an example where the messages being transmitted are RF signals and the receiving unit performs an RSSI measure of the received packet that is an average value over the entire packet, the start of a transmission must be anticipated in order to have the transmitted message centred on the requested angle $\alpha_i$ according to the following equation:

$$t(\alpha_i) - \frac{T_{rev}(t)}{2\pi} * \alpha_i - \frac{T_i}{2} + t_0$$

where $t_0$ is the time of the centre of the impact and $T_i$ is the time duration of the i-th message. In an exemplary embodiment, the time length $T_i$ is in the range of about 5 ms to 8 ms.

To enable the recognition of the tire position on the vehicle 1 for each tire 2, several messages $S_i$ are transmitted by each TMS unit 3 at different angular positions $A_i$ during each rotation of the tire 2, in order to create a pattern 10 of RSSI values associated to each couple TMS unit- tire. Each RSSI pattern 10 can be thought of as a vector in a n-dimensional space, being composed by n RSSI values corresponding to n transmission angles. In an embodiment, the angle of transmission of each transmitted message is coded in the message. In yet another embodiment, the sequence of messages from the fixed angles may be known a priori. This is possible because each message comprises a header section and a payload: the header section in turn comprises a PID field that identifies the type of message being transmitted.

The number and value of transmission angles can be predetermined arbitrarily, as long as there is enough inter-packet time between one transmission and the following so to avoid interference. Besides the specific choice of the transmission angles, and because the angular positions of the TMS units during wheel revolution are clearly related to the wheel speed, limiting the wheel speed without altering the choice of predetermined transmission angles may also keep a desired value of minimum inter-packet time constant.

According to a particularly advantageous embodiment, the transmissions during wheel rotation all keep place when the TMS unit 3 is in the upper half of the wheel arc: this solution provides higher RSSI values and minimises interferences due to the close proximity and impact of the TMS units 3 with the ground. In an exemplary, specific implementation of said embodiment shown in Fig. 4, n is equal to 5, so that 5 predetermined transmission angles $A_1$-$A_5$ are determined, equally spaced by 45° and starting at 90° from the position of impact with the ground $A_0$ at 0 degrees.

For each message $S_i$ being received, the corresponding RSSI value can be used as it is directly measured or, as mentioned above, a derived RSSI value (e.g. an average or median or mean value calculated over time or over a number of received packets with respect to the same angle) can be used for the evaluation. The latter case is useful to obtain a reduction of the inevitable noise superimposed on the ideal RSSI value that would be received in ideal conditions. This noise is due to several factors, such as: the scattering of the transmitted signal reflected by the ground that changes over time due to ground irregularities and different road surface materials; the scattering of the packet signal reflected by some vehicle body parts that changes over time due to change in the path length induced by vibrations and other geometrical variations, for instance oscillations due to the vehicle suspensions. Exemplary applicable averaging processes can be the computation of a mean value, of a median value or any other process known in the art that is suitable to filter out the outliers due to the RSSI noise described above.

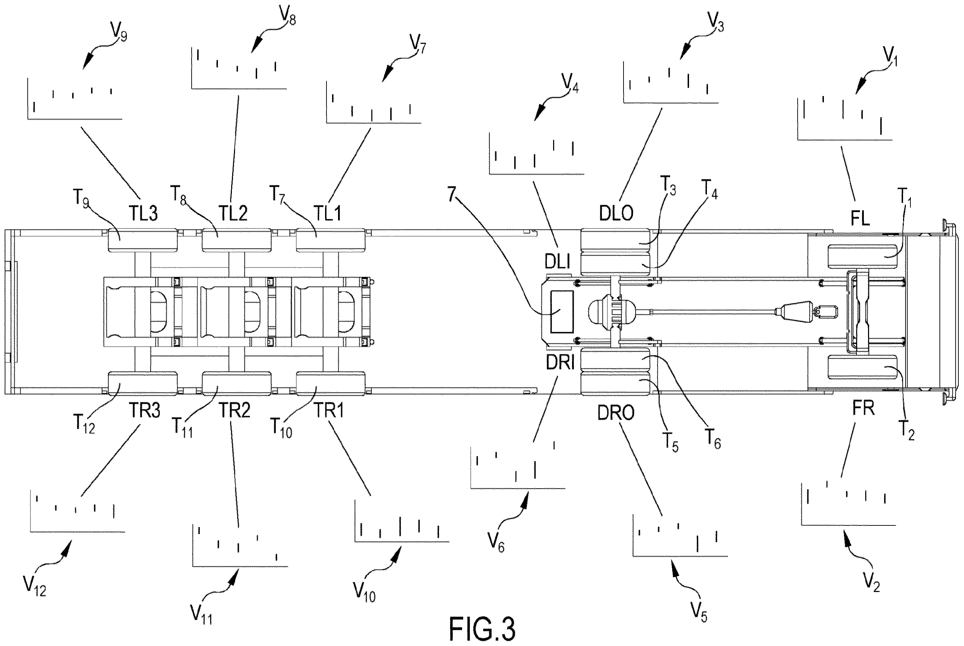

Figures 3 and 4 show an example with a visual representation of RSSI patterns 10 related to n predetermined transmission angles $A_i$: in this example, n=5 and therefore n transmission angles $A_1$-$A_5$ are shown.

Fig. 3, in particular, shows a truck with 12 wheels $T_i$ (with i going from 1 to 12) comprising tractor wheels and trailer wheels. Tire $T_1$ is in the front-left (FL) position; tire $T_2$ is in the front-right (FR) position; tires $T_3$ and $T_4$ are the left driving wheels, respectively in outer (DLO) and inner (DLI) position; tires $T_5$ and $T_6$ are the right driving wheels, respectively in outer (DRO) and inner (DRI) position; tires $T_7$, $T_8$ and $T_9$ are the left tractor wheels, respectively at positions TL1, TL2 and TL3; tires $T_{10}$, $T_{11}$ and $T_{12}$ are the right tractor wheels, respectively at positions TR1, TR2 and TR3. Figures 3 and 4, in combination, show an exemplary embodiment where the TMS unit 3 associated to each tire $T_i$ (with i going from 1 to 12) transmits 5 signals $S_1$-$S_5$ from 5 predetermined transmission angles $A_1$-$A_5$, thereby resulting in 12 RSSI patterns $V_i$, each pattern $V_i$ associated to each tire $T_i$.

More than one on-vehicle radio receiver 7 (e.g.

antenna) may be used as receiving unit. In the particular case of the vehicle 1 being a truck, a radio receiver may be installed in association with the tractor wheels of the truck and a further radio receiver may be installed in association with the trailer wheels of the truck. In yet another truck configuration where multiple trailers are attached to the vehicle tractor, a radio receiver may be placed in association to each trailer. In these scenarios, each radio receiver would receive the transmission signals of those TMS units exclusively associated to the tires of the corresponding tractor/trailer section.

It will be readily apparent to the skilled person that the reference to such a truck is for example only: the present invention is not particularly limited to any type of vehicle but may be used to detect the mounting position of a tire on a passenger vehicle as well as that of vehicles such as trucks, semi-trucks, buses and the like.

Fig. 5 shows a schematic flow diagram of a method for automatically identifying the mounting position of a tire 2 on a vehicle 1 according to an embodiment of the present invention.

The auto-location method has a starting step S0. The method is based on the assumption that a reference RSSI vector (i.e. code or pattern) associated to a set of n predefined transmission angles $A_i$ is available for each given and known wheel position on the vehicle 1. Each vector in the set of reference vectors has the same structure of the RSSI pattern 10: it comprises n RSSI values associated to the n predefined transmission angles and corresponds to a specific wheel in a known mounting position. Said set of reference RSSI codes may be simply pre-stored in a memory.

It will be readily appreciated by the person skilled in the art that the particular location or association of the memory storing said set of reference RSSI codes is not essential for the present invention: the set may be stored on the memory associated with a TMS unit, on the memory associated with the receiving unit, on any other memory associated with the processing and/or determination units or even on any other memory associated with the remote server.

In an embodiment, said set of reference vectors is calculated in a learning phase during an optional method step S1: during said learning phase, each TMS unit 3 on each tire 2 of the vehicle 1 transmits messages $S_i$ to the receiving unit 7 at the n predefined transmission angles $A_i$ over multiple wheel revolutions. Said set of reference vectors is therefore computed for all wheels of the vehicle, wherein the reference vector associated to a given wheel in a given position is formed by the average or median or mean RSSI values derived per transmission angle. At the end of the learning phase S1, an association is therefore established between each wheel in a specific mounting position on the vehicle and the corresponding RSSI reference code.

Although not essential, the preliminary learning phase described above allows to minimise potential position recognition errors. It is particularly useful in the scenario where the vehicle is a long vehicle comprising many wheels (e.g. a truck), which may change its tire configuration (e.g. change in the configuration of the tractor section, trailer section, amount of twin tires, etc.) over time. Even if it has been experimentally observed that the reference RSSI codes tend to remain stable over a period of time of several days if no tire configuration change occurs, in such a scenario it may be further contemplated to repeat the learning phase periodically, e.g. every day, to ensure the reference RSSI codes reflect the updated tire configuration.

In execution, during a transmitting step S2, the TMS unit 3 of each wheel 2 transmits, during rotation of the wheel, messages $S_i$ to the receiving unit 7 at the same set of predefined transmission angles $A_i$ as that with respect to which the reference RSSI codes have been calculated. These messages are received by the receiving unit 7 (step S3).

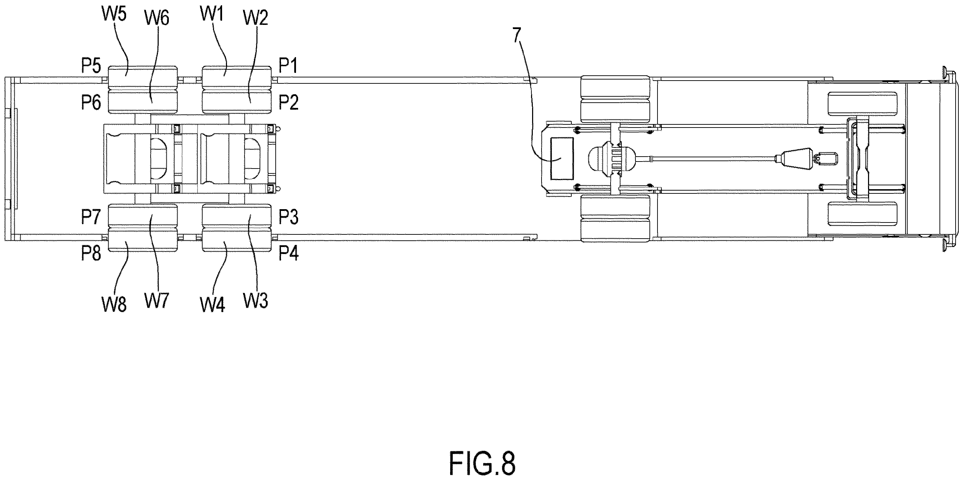

The transmission step S2 is not limited to any particular position of the receiving unit 7 on board of the vehicle 1. While a certain degree of asymmetry in the mounting position of the receiving unit 7 with respect to the centre of the vehicle 1 may render the RSSI patterns 10 of the wheels more "characteristic", - and therefore allow to identify more easily the differences with the reference vectors - this is only an optional requirement. The method can determine with a high accuracy - as shown also in Figures 8-10 described below - the mounting position of a certain wheel 2 regardless of the position of the receiving unit 7 on the vehicle 1.

At step S4, for a sequence of messages comprising n messages $S_i$ transmitted at the n predetermined transmission angles $A_i$ by a TMS unit 3 to the receiving unit 7, the processing unit performs a plurality of processing sub-steps. It measures the RSSI value of each received message $S_i$ (S4a); based on the measured RSSI values and on the association of each signal Si with the predetermined transmission angle $A_i$ from which it has been transmitted, it derives a single angular RSSI value associated to the respective predetermined angular position (S4b); it groups the derived angular RSSI values for each predetermined transmission angle $A_i$ as to form a RSSI pattern 10 associated to all the predetermined transmission angles $A_i$ and stores it in a memory (S4c); then, it compares each of said calculated RSSI patterns 10 to each code in the set of reference RSSI codes (S4d): the comparison comprises the evaluation of the differences between the RSSI pattern 10 under analysis and each RSSI code in the set of reference RSSI codes.

At step S5, the determination unit determines the mounting position of the tire 2 associated to the sequence of messages $S_i$ transmitted by the corresponding TMS unit 3 based on the results of the evaluated differences. The method ends at step S6.

It is noted that the above-described step S4 is not limited to the collection of the n messages $S_i$ over a single wheel rotation: the RSSI pattern 10 associated to a tire 2 can be computed based on a single transmission sequence of n messages (i.e. over one wheel rotation only), but it can also be computed based on two or more sequences of n messages (i.e. over multiple wheel rotations): in this latter case, in the RSSI pattern 10, the RSSI value corresponding to the $i_{th}$ transmission angle can be an average or median or mean value calculated over the several transmissions received in association to that angle in order to increase the reliability of the position detection.

An exemplary metric used for the evaluation of the differences between the RSSI pattern under analysis and each reference RSSI code at step S4d is a simple distance metric such as the Euclidean distance. The Euclidean distance approach is quite robust to noise while being simple and easy to implement, requiring very low computing resources. However, it will be readily apparent to the skilled person that the evaluation step is not limited to any specific metric being used, and that different types of metrics are applicable in order to carry out said evaluation.

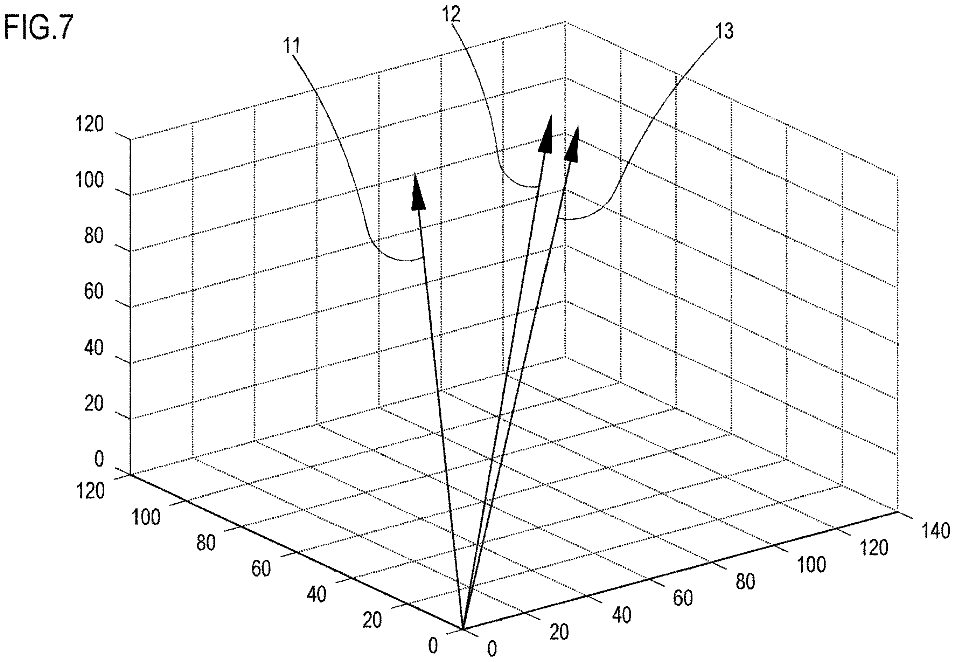

In the exemplary embodiment shown in Fig. 7 in combination with the tire configuration of Fig. 3, the evaluation is based on the Euclidean distance and the decision on the mounting position of the wheel is based on the lowest value of the Euclidean distance from each RSSI reference code in the set of reference RSSI codes. Fig. 7 shows a simplified example where a RSSI vector 13 calculated in association to tire $T_{12}$ is compared to the reference RSSI code 11 associated to the tire mounting position TR2 and to the reference RSSI code 12 associated to the mounting position TR3. It can be visually seen that the RSSI vector 13 has the lowest Euclidean distance from the reference RSSI code 12: it is therefore determined that the wheel associated to the RSSI pattern 13 is in the mounting position TR3. Fig. 7 shows a simplified comparison but, as it appears clear from the present disclosure, the evaluation is performed with respect to each reference RSSI code associated to each known tire mounting position.

It is noted, with respect to the processing and determination units, that several architectural possibilities are foreseen which do not limit the applicability and scope of the method according to the present invention. In an exemplary embodiment, the processing and determination units are separate hardware devices, each further comprising at least a processor and a memory. In yet another embodiment, the processing and determination units may be implemented as software layers by the same hardware device, which may implement both the processing and determination steps. In yet another embodiment, the processing and determination units may be implemented as software layers in the receiving unit 7 itself, such that the on-board receiving unit 7 may perform all the functions of the method according to the present invention. In yet another embodiment, processing may be distributed such that the processing and determination steps S4 and S5 may be implemented as software layers on a remote device (i.e. not installed on the vehicle, such as a remote cloud computing system).

It will be readily understood by the person skilled in the art that the data processing required by the method of the present invention (comprising the final determination S5 of the mounting position of a wheel) may be carried out exclusively by the device(s) installed on the vehicle, exclusively at a remote server or, alternatively, it may be shared between the remote server and the on-board device(s).

Further, the reliability of the auto-location method according to the present invention may further be increased by applying - in addition to or in replacement of the current evaluation step - machine learning algorithms in order to determine the actual mounting position of a given wheel under analysis.

In cases where the vehicle 1 is particularly used for loading goods (e.g. a van, a truck or the like), an increased load on the vehicle suspensions may affect the relative position of the receiving unit 7 and, as a consequence, the RSSI patterns 10 of the wheels concerned. This drawback can be overcome by modifying the method to further use the load estimation value as measured and transmitted by the TMS units 3 to the receiving unit 7 during execution.

Fig. 6 shows a schematic flow diagram of a method for automatically identifying the mounting position of a tire 2 on a vehicle 1 according to another embodiment of the present invention.

The method depicted in Fig. 6 is a slightly modified version of the method described above with reference to Fig. 5. It solves the same known drawbacks of the state of the art as the method described above in relation to Fig. 5. However, it has been observed that, for those scenarios where vehicle load is a relevant parameter, accuracy in the automatic identification of tire mounting positions according to the method is improved.

In this modified version of the above-described method, each predefined reference RSSI code can be further associated to a predefined and/or expected load value associated to a certain wheel mounting position, so that reference code-load pairs can be created and pre-stored in association to a given wheel in a given position. These reference code/load pairs may as well be established as output of an optional preliminary learning phase in the case said learning phase is foreseen.

Therefore, where reference code-load pairs are used, each RSSI reference code in the set of RSSI reference codes is additionally associated to a load or load range for the wheel position: in this case, the processing and determination steps are further based on comparing and identifying the differences between the pair formed by the actual RSSI pattern under analysis and the load value transmitted by the corresponding TMS unit and each of the pairs formed by each reference RSSI code and a reference load value (or range).

The method has a starting step S7. The method is based on the assumption that a reference RSSI vector (i.e. code or pattern) associated to a set of n predefined

transmission angles $A_i$ is available for each given and known wheel position on the vehicle 1. Each vector in the set of reference vectors has the same structure of the RSSI pattern 10: it comprises n RSSI values associated to the n predefined transmission angles and corresponds to a specific wheel in a known mounting position. In addition, a predetermined and/or expected load value or range for the respective known mounting position is also associated to each reference RSSI vector in the set. Said pairs of reference RSSI codes-load may be simply pre-stored in a memory in association with the respective known mounting position.

Step S8 is optional, and amounts to a learning phase like that described in relation to step S1. However, in addition, during the learning phase S8 also measurements of the estimated load of the vehicle are transmitted by the TMS units 3 and collected, in order to associate them with the corresponding reference RSSI code as to form and store reference RSSI code-load pairs.

In execution, during a transmitting step S9, the TMS unit 3 of each wheel 2 transmits, during rotation of the wheel, messages $S_i$ to the receiving unit 7 at the same set of predefined transmission angles $A_i$ as that with respect to which the reference RSSI codes have been calculated. The TMS units 3 additionally transmit the measurement of the current estimated load of the vehicle 1. These messages are received by the receiving unit 7 (step S10).

At step S11, for a sequence of messages comprising n messages $S_i$ transmitted at the n predetermined transmission angles $A_i$ and the current measurements of the estimated load of the vehicle by a TMS unit 3 to the receiving unit 7, the processing unit performs a plurality of processing sub-steps. It measures the RSSI value of each received message $S_i$ (S11a); based on the measured RSSI values and on the association of each signal Si with the predetermined transmission angle $A_i$ from which it has been transmitted, it derives a single angular RSSI value associated to the respective predetermined angular position (S11b); it groups the derived angular RSSI values for each predetermined transmission angle $A_i$ as to form a RSSI pattern 10 associated to all the predetermined transmission angles $A_i$ and stores it in a memory (S11c); it associates the so obtained RSSI pattern 10 with the estimated load measurement received by the corresponding TMS unit as to form a RSSI pattern-load value pair (S11d); it retrieves the set of reference RSSI code-load pairs (S11e); then, it compares each of said calculated RSSI pattern-load pairs to each pair in the set of reference RSSI code-load pairs (S11f): the comparison comprises the evaluation of the differences between the pair formed by the actual RSSI pattern under analysis and the load value transmitted by the corresponding TMS unit and each of the pairs formed by each reference RSSI code and a reference load value (or range).

At step S12, the determination unit determines the mounting position of the tire 2 associated to the sequence of messages $S_i$ and estimated load measurement transmitted by the corresponding TMS unit 3 based on the results of the evaluated differences. The method ends at step S13.

It is noted that, thanks to the methods and system as described above, it is possible to recognise changes in the position of a tire (for example, in the case of a tire swap).It is also noted that with the methods and system according to the present invention it is possible to recognise also the position of a newly mounted tire 2 or of a newly mounted TMS unit 3, as is the case of a tire replacement or of a tire-mounted sensor replacement. These cases can be discriminated thanks to the fact that, as described in relation to Fig. 1, different TMS units 3 carry different unique identification numbers which are embedded in their transmission messages; the messages transmitted by TMS units 3 may further contain the specific identification number of the RFID sensor 6 of the tire 2 where they are attached.

The advantages of the present invention will be even more evident with reference to the examples shown in Figs. 8-10.

Fig. 8 shows the configuration of a truck with a 8-wheels trailer; the trailer wheels $W_1$-$W_8$ are placed in the respective mounting positions P1 to P8.

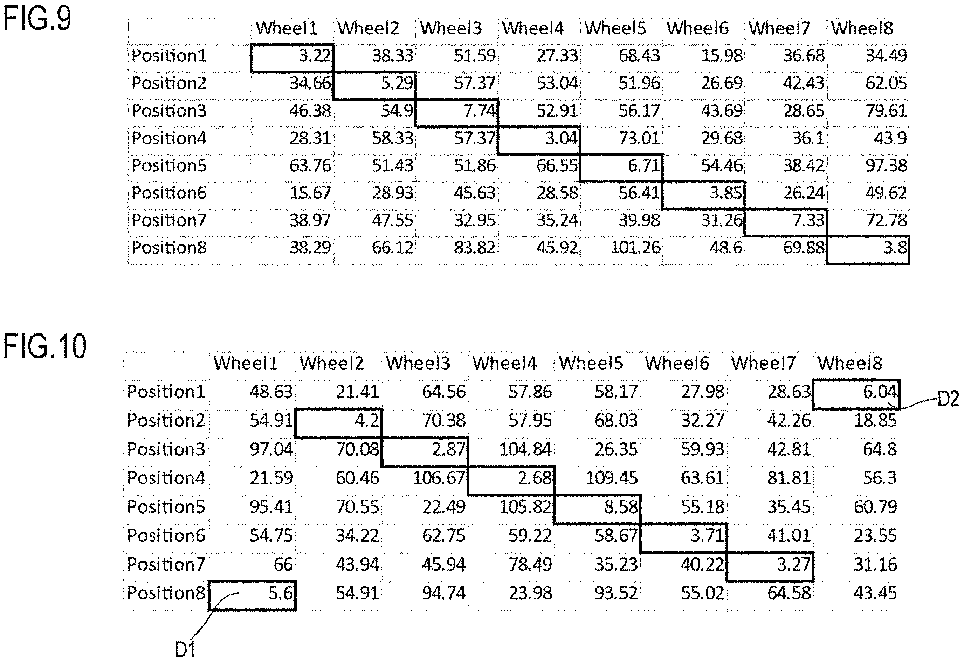

Fig. 9 shows a matrix representing the values of the Euclidean distance of the RSSI pattern 10 calculated for each wheel $W_1$-$W_8$ after execution of a method for automatically identifying the mounting position of the wheels of a vehicle according to the present invention. For each wheel $W_i$, the signals $S_i$ transmitted by the corresponding TMS unit 3 have been collected, a corresponding RSSI vector 10 has been derived and the Euclidean distance of said vector from each code in the set of reference RSSI codes associated to positions P1-P8 has been calculated and is shown accordingly in the matrix. The matrix of Fig. 9 particularly shows a case where none of wheels $W_1$-$W_8$ has been replaced or has changed position with respect to when the set of reference RSSI codes was calculated and pre-stored. It is noted, with reference to said matrix, that the lowest values are all on the diagonal of the matrix, which is in line with the fact that the positions of the wheels have not been changed.

Fig. 10 also shows a matrix representing the values of the Euclidean distance of the RSSI pattern 10 calculated for each wheel $W_1$-$W_8$ after execution of a method for automatically identifying the mounting position of the wheels of a vehicle according to the present invention. For each wheel $W_i$, the signals $S_i$ transmitted by the corresponding TMS unit 3 have been collected, a corresponding RSSI vector 10 has been derived and the Euclidean distance of said vector from each code in the set of reference RSSI codes associated to positions P1-P8 has been calculated and is shown accordingly in the matrix. The matrix of Fig. 10 particularly shows a case where wheel $W_1$ in position P1 has been swapped with wheel $W_8$ in position P8 with respect to when the set of reference RSSI codes was calculated and pre-stored:

therefore, wheels $W_2$-$W_7$ are unchanged in positions P2-P7 respectively, whereas $W_8$ is in position P1 and $W_1$ is in position P8. The method according to the present invention readily identifies the swap, in that it can be seen that the lowest calculated Euclidean distance of the RSSI vector 10 of wheel $W_1$ is not anymore that in relation to the reference RSSI code for position P1, but that in relation to the reference RSSI code for position P8 - and viceversa for wheel $W_8$ and position P1.

The present invention has been described so far with reference to preferred embodiments. It is intended that there may be other embodiments which refer to the same inventive concept and fall within the scope of the following claims.

**Claims**

1. A computer-implemented method for automatic detection of the mounting position of a tire on a vehicle equipped with two or more tires, the method comprising:

   - transmitting, by a tire mounted sensor mounted on the tire, one or more signals at each of a plurality of predetermined angular positions during at least one rotation of the tire;
   - receiving, by a receiving unit, the transmitted one or more signals;
   - processing, by a processing unit, the received one or more signals by:

     - measuring the relative signal strength indicator (RSSI) value of each of the one or more signals transmitted at each of the plurality of predetermined angular positions;
     - associating, based on the measured RSSI values, a derived angular RSSI value to each of the plurality of predetermined angular positions;
     - grouping the derived angular RSSI values into a group of angular RSSI values forming an RSSI code associated to the tire;
     - evaluating the difference of the group of angular RSSI values associated to the tire with respect to each code in a predetermined set of reference RSSI codes, wherein each code of said predetermined set of reference RSSI codes is associated to a known tire mounting position on the vehicle; and

   - determining the mounting position of the tire on the vehicle based on the evaluated difference of the group of angular RSSI values associated to the tire with respect to each of the predetermined reference RSSI codes.

2. The method according to any of the preceding claims, wherein associating, based on the measured RSSI values, a derived angular RSSI value to each of the plurality of predetermined angular positions comprises:

   - selecting the measured RSSI value of any of the one or more signals transmitted at the predetermined angular position as the derived angular RSSI value associated to the predetermined angular position; or
   - averaging the measured RSSI values of the one or more signals transmitted at the predetermined angular position and selecting the resulting average value as the derived angular RSSI value associated to the predetermined angular position.

3. The method according to any of the preceding claims, wherein the one or more transmitted signals encode a unique identifier of the corresponding tire mounted sensor transmitting the signal; and/or wherein the one or more transmitted signals encode a unique identification number corresponding to a RFID tag embedded in the corresponding tire and allowing univocal identification of said tire.

4. The method according to any of the preceding claims, further comprising a preliminary learning phase for each tire mounted on the vehicle in a known mounting position comprising the following steps:

   - forming an RSSI code associated to the tire based on the group of angular RSSI values according to any of the preceding claims;
   - saving the obtained RSSI code as the reference RSSI code in association to the corresponding known mounting position of the tire on the vehicle.

5. The method according to any of the preceding claims, wherein the plurality of predetermined angular positions is selected from the upper half of the tire arc.

6. The method according to any of the preceding claims, wherein the one or more transmitted signals encode the angular position from the plurality of predetermined angular positions at which the signal is transmitted.

7. The method according to any of the preceding claims, wherein the one or more transmitted signals are radio packets and the receiving unit comprises a radio receiver.

8. A system for automatic detection of the mounting position of a tire on a vehicle equipped with two or more tires, the system comprising:

- a memory configured to store a predetermined set of reference RSSI codes, wherein each code of said predetermined set of reference RSSI codes is associated to a known tire mounting position on the vehicle;
- a tire mounted sensor mounted on the tire and configured to transmit one or more signals at each of a plurality of predetermined angular positions during at least one rotation of the tire;

- a receiving unit configured to receive the one or more transmitted signals;
- a processing unit configured to process the received one or more signals by:

- measuring the relative signal strength indicator (RSSI) value of each of the one or more signals transmitted at each of the plurality of predetermined angular positions;
- associating, based on the measured RSSI values, a derived angular RSSI value to each of the plurality of predetermined angular positions;
- grouping the derived angular RSSI values into a group of angular RSSI values forming an RSSI code associated to the tire;
- evaluating the difference of the group of angular RSSI values associated to the tire with respect to each code in the predetermined set of reference RSSI codes; and
- a determination unit configured to determine the mounting position of the tire on the vehicle based on the evaluated difference of the group of angular RSSI values associated to the tire with respect to each of the predetermined reference RSSI codes.

9. The system according to claim 8, wherein associating, based on the measured RSSI values, a derived angular RSSI value to each of the plurality of predetermined angular positions comprises:

- selecting the measured RSSI value of any of the one or more signals transmitted at the predetermined angular position as the derived angular RSSI value associated to the predetermined angular position; or
- averaging the measured RSSI values of the one or more signals transmitted at the predetermined angular position and selecting the resulting average value as the derived angular RSSI value associated to the predetermined angular position.

10. The system according to claim 8 or 9, wherein the one or more transmitted signals encode a unique identifier of the corresponding tire mounted sensor transmitting the signal; and/or
wherein the one or more transmitted signals encode a unique identification number corresponding to a RFID tag embedded in the corresponding tire and allowing univocal identification of said tire.

11. The system according to any of claims 8 to 10, wherein the processing unit is further configured to perform a preliminary learning phase for each tire mounted on the vehicle in a known mounting position comprising the following steps:

- forming an RSSI code associated to the tire based on the group of angular RSSI values according to any of claims 8 to 10;
- saving the obtained RSSI code as the reference RSSI code in association to the corresponding known mounting position of the tire on the vehicle.

12. The system according to any of claims 8 to 11, wherein the one or more transmitted signals encode the angular position from the plurality of predetermined angular positions at which the signal is transmitted.

13. The system according to any of claims 8 to 12, wherein the plurality of predetermined angular positions is selected from the upper half of the tire arc.

14. A computer program comprising instructions which, when the program is executed by a computer, cause the computer to carry out the method of any of claims 1 to 7.

FIG.1

EP 4 446 137 A1

FIG.2

FIG.3

EP 4 446 137 A1

FIG.4

FIG.5

FIG.6

```
        ┌─────────┐
        │   S7    │
        └─────────┘
             │
             ▼
        ┌─────────┐
        │   S8    │
        └─────────┘
             │
             ▼
        ┌─────────┐
        │   S9    │
        └─────────┘
             │
             ▼
        ┌─────────┐
        │   S10   │
        └─────────┘            S11
             │
    ┌ ─ ─ ─ ─│─ ─ ─ ─ ─ ─ ┐
    │        ▼             │
    │   ┌─────────┐        │
    │   │  S11a   │        │
    │   └─────────┘        │
    │        │             │
    │        ▼             │
    │   ┌─────────┐        │
    │   │  S11b   │        │
    │   └─────────┘        │
    │        │             │
    │        ▼             │
    │   ┌─────────┐        │
    │   │  S11c   │        │
    │   └─────────┘        │
    │        │             │
    │        ▼             │
    │   ┌─────────┐        │
    │   │  S11d   │        │
    │   └─────────┘        │
    │        │             │
    │        ▼             │
    │   ┌─────────┐        │
    │   │  S11e   │        │
    │   └─────────┘        │
    │        │             │
    │        ▼             │
    │   ┌─────────┐        │
    │   │  S11f   │        │
    │   └─────────┘        │
    └ ─ ─ ─ ─│─ ─ ─ ─ ─ ─ ┘
             │
             ▼
        ┌─────────┐
        │   S12   │
        └─────────┘
             │
             ▼
        ┌─────────┐
        │   S13   │
        └─────────┘
```

FIG.7

EP 4 446 137 A1

FIG.8

FIG.9

|  | Wheel1 | Wheel2 | Wheel3 | Wheel4 | Wheel5 | Wheel6 | Wheel7 | Wheel8 |
|---|---|---|---|---|---|---|---|---|
| Position1 | 3.22 | 38.33 | 51.59 | 27.33 | 68.43 | 15.98 | 36.68 | 34.49 |
| Position2 | 34.66 | 5.29 | 57.37 | 53.04 | 51.96 | 26.69 | 42.43 | 62.05 |
| Position3 | 46.38 | 54.9 | 7.74 | 52.91 | 56.17 | 43.69 | 28.65 | 79.61 |
| Position4 | 28.31 | 58.33 | 57.37 | 3.04 | 73.01 | 29.68 | 36.1 | 43.9 |
| Position5 | 63.76 | 51.43 | 51.86 | 66.55 | 6.71 | 54.46 | 38.42 | 97.38 |
| Position6 | 15.67 | 28.93 | 45.63 | 28.58 | 56.41 | 3.85 | 26.24 | 49.62 |
| Position7 | 38.97 | 47.55 | 32.95 | 35.24 | 39.98 | 31.26 | 7.33 | 72.78 |
| Position8 | 38.29 | 66.12 | 83.82 | 45.92 | 101.26 | 48.6 | 69.88 | 3.8 |

FIG.10

|  | Wheel1 | Wheel2 | Wheel3 | Wheel4 | Wheel5 | Wheel6 | Wheel7 | Wheel8 |
|---|---|---|---|---|---|---|---|---|
| Position1 | 48.63 | 21.41 | 64.56 | 57.86 | 58.17 | 27.98 | 28.63 | 6.04 | D2 |
| Position2 | 54.91 | 4.2 | 70.38 | 57.95 | 68.03 | 32.27 | 42.26 | 18.85 |
| Position3 | 97.04 | 70.08 | 2.87 | 104.84 | 26.35 | 59.93 | 42.81 | 64.8 |
| Position4 | 21.59 | 60.46 | 106.67 | 2.68 | 109.45 | 63.61 | 81.81 | 56.3 |
| Position5 | 95.41 | 70.55 | 22.49 | 105.82 | 8.58 | 55.18 | 35.45 | 60.79 |
| Position6 | 54.75 | 34.22 | 62.75 | 59.22 | 58.67 | 3.71 | 41.01 | 23.55 |
| Position7 | 66 | 43.94 | 45.94 | 78.49 | 35.23 | 40.22 | 3.27 | 31.16 |
| Position8 | 5.6 | 54.91 | 94.74 | 23.98 | 93.52 | 55.02 | 64.58 | 43.45 |

D1

Europäisches
Patentamt

European
Patent Office

Office européen
des brevets

# EUROPEAN SEARCH REPORT

Application Number

**EP 23 16 7560**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2014 231337 A (TAIHEIYO KOGYO KK) 11 December 2014 (2014-12-11) | 1-4, 6-12,14 | INV. B60C23/04 |
| A | * paragraph [0015] – paragraph [0044]; figures 1-5 * | 5,13 | |
| X | US 2005/187667 A1 (VREDEVOOGD LOREN D [US] ET AL) 25 August 2005 (2005-08-25) * paragraph [0018] – paragraph [0057]; figures 1-4 * | 1,8 | |
| A | EP 2 711 204 A1 (NISSAN MOTOR [JP]) 26 March 2014 (2014-03-26) * figure 3 * | 5,13 | |

TECHNICAL FIELDS
SEARCHED     (IPC)

**B60C**

The present search report has been drawn up for all claims

| Place of search | Date of completion of the search | Examiner |
|---|---|---|
| Munich | 19 September 2023 | Billen, Karl |

EPO FORM 1503 03.82 (P04C01)

## ANNEX TO THE EUROPEAN SEARCH REPORT
## ON EUROPEAN PATENT APPLICATION NO.

EP 23 16 7560

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2023

| Patent document cited in search report | | Publication date | Patent family member(s) | | Publication date |
|---|---|---|---|---|---|
| JP 2014231337 | A | 11-12-2014 | NONE | | |
| US 2005187667 | A1 | 25-08-2005 | NONE | | |
| EP 2711204 | A1 | 26-03-2014 | BR 112013028300 | A2 | 10-01-2017 |
| | | | CN 103582577 | A | 12-02-2014 |
| | | | EP 2711204 | A1 | 26-03-2014 |
| | | | KR 20130130878 | A | 02-12-2013 |
| | | | MX 340372 | B | 07-07-2016 |
| | | | MY 165692 | A | 20-04-2018 |
| | | | RU 2549577 | C1 | 27-04-2015 |
| | | | US 2014088816 | A1 | 27-03-2014 |
| | | | WO 2012157308 | A1 | 22-11-2012 |

EPO FORM P0459

For more details about this annex : see Official Journal of the European Patent Office, No. 12/82

**REFERENCES CITED IN THE DESCRIPTION**

**Patent documents cited in the description**

• EP 21193660 A